# EUROPEAN PATENT SPECIFICATION

(11) **EP 4 467 434 B1**
(45) Date of publication and mention of the grant of the patent: **21.10.2026**
(21) Application number: 24169388.6
(22) Date of filing: 10.04.2024
(51) Int. Cl.: B62K 23/02, B62J 6/056, B62J 6/16

(54) **HANDLEBAR SWITCH DEVICE**
LENKSTANGENSCHALTVORRICHTUNG
DISPOSITIF DE COMMUTATION DE GUIDON

(30) Priority: 24.05.2023 JP 2023085113
(43) Date of publication of application: 27.11.2024
(73) Proprietor: Yamaha Hatsudoki Kabushiki Kaisha, Iwata-shi, Shizuoka 438-8501 (JP); TOYO DENSO KABUSHIKI KAISHA, Minato-ku Tokyo 105-0004 (JP)
(72) Inventor: IKEGAYA, Ryosuke, Shizuoka, 438-8501 (JP); UCHIDA, Shinichi, Shizuoka, 438-8501 (JP); HORIUCHI, Tomoki, Shizuoka, 438-8501 (JP); NAGATA, Kazuki, Saitama, 350-2280 (JP); TANAKA, Yumiko, Saitama, 350-2280 (JP); YAMAMOTO, Kazuyoshi, Saitama, 350-2280 (JP); JIMBO, Koji, Saitama, 350-2280 (JP)
(74) Representative: Betten & Resch

(56) References cited:
- EP-A1- 3 093 228
- JP-B2- 6 417 835
- US-B2- 8 723 659

## Description

This application is based upon and claims the benefit of priority from Japanese patent application No. 2023-085113, filed on May 24, 2023.

### TECHNICAL FIELD

The present invention relates to a handlebar switch device.

### BACKGROUND ART

Patent Literature 1: Japanese Patent Publication No. 6077883
Patent Literature 2: EP 3 093 228 A1

A handlebar switch device installed on a vehicle such as a motorcycle is equipped with various operation switches. For example, a handlebar switch device is equipped with a turn signal switch that controls the actuation of left and right turn signals, and Patent Literature 1 describes controlling the actuation of a turn signal. Specifically, Patent Literature 1 describes that the turn signal is automatically stopped in accordance with the driving condition of the vehicle after the actuation of the turn signal.

However, in the case of the technique described in Patent Literature 1, there is a risk that the turn signal is automatically stopped at a timing unintended by the operator in accordance with the driving condition of the vehicle. Consequently, a problem occurs that it is not possible to perform an automatic stop operation in accordance with the operator's will. Such a problem may also occur in not only a turn signal switch but also another switch that controls the actuation of another device.

Patent Literature 2 discloses a handlebar switch device according to the preamble of claim 1.

### SUMMARY

An object of the present invention is to provide a handlebar switch device that can solve the abovementioned problem, namely, a problem that it is not possible to perform an automatic stop control of the actuation of a device by the operator's will.

The present invention is defined in the independent claims. The dependent claims defined embodiments of the invention.

With the configurations as described above, the present invention enables an automatic stop control of the actuation of a device by the operator's will in a handlebar switch device.

### BRIEF DESCRIPTION OF DRAWINGS

Fig. 1 is a view showing the configuration of a handlebar switch device in a first example embodiment of the present invention;
Fig. 2A is a view showing the configuration of a contact device of a turn signal switch disclosed in Fig. 1;
Fig. 2B is a view showing the configuration of the contact device of the turn signal switch disclosed in Fig. 1;
Fig. 3 is a view showing the configuration of the contact device of the turn signal switch disclosed in Fig. 1;
Fig. 4 is a view showing the configuration of an operation system including the turn signal switch disclosed in Fig. 1; and
Fig. 5 is a flowchart showing the motion of a turn signal by an operation on the turn signal switch disclosed in Fig. 1.

### EXAMPLE EMBODIMENTS

### <First Example Embodiment>

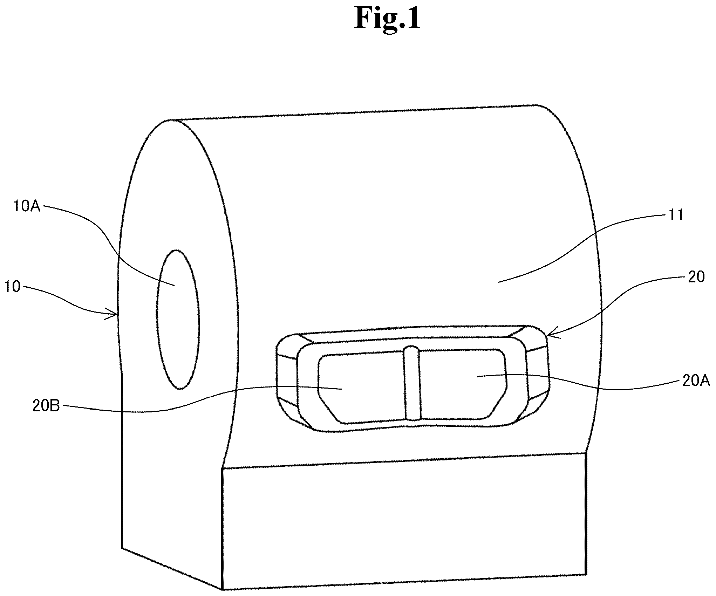

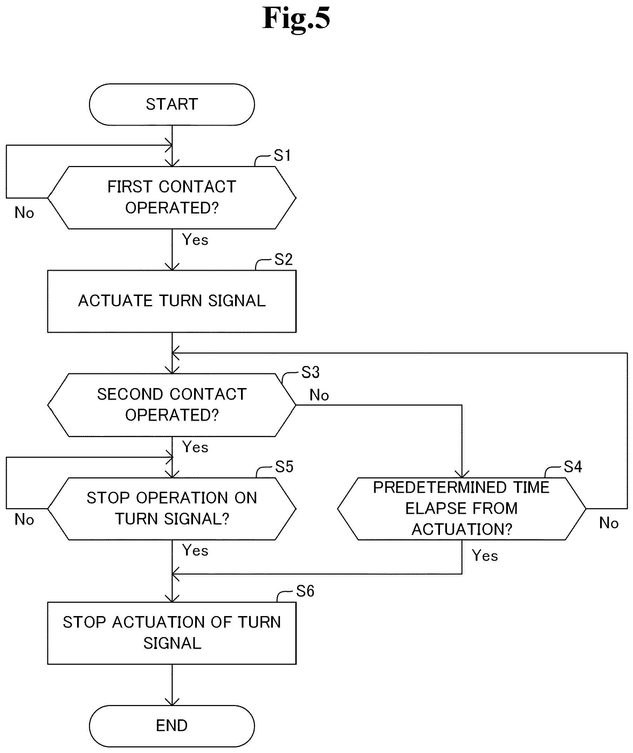

A first example embodiment of the present invention will be described with reference to Figs. 1 to 5. Figs. 1 to 4 are views for describing the configuration of a handlebar switch device, and Fig. 5 is a view for describing the motion of a turn signal by an operation on the handlebar switch device.

The handlebar switch device in the present invention is installed, for example, on the handlebar of a straddle-type vehicle such as a motorcycle, and is equipped with various operation switches. In this example embodiment, a case will be illustrated in which a turn signal switch for operating left and right turn signals to light up is mounted as the operation switch mounted on the handlebar switch device. However, the operation switch mounted on the handlebar switch device is not limited to the turn signal switch, and may be any operation switch for operating another device. Meanwhile, the straddle-type vehicle on which the handlebar switch device is mounted is not limited to a motorcycle, and may be any vehicle.

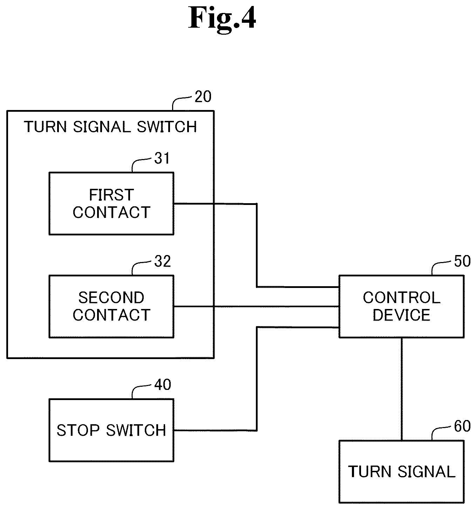

As shown in Fig. 1, the handlebar switch device in this example embodiment includes a case 10 that forms the outer shape of the handlebar switch device, a turn signal switch 20 provided on a predetermined surface of the case 10, and a contact device 30 located on the inner surface side of the turn signal switch 20 and mounted inside the case 10. Then, in this example embodiment, as an operation system by the handlebar switch device, a stop switch 40 mounted in a predetermined position of the case 10, a control device 50 that detects the operation statuses of the contact device 30 of the turn signal switch 20 and the stop switch 40 and controls the actuation of a turn signal 60, and the turn signal 60 to be operated with the turn signal switch 20 and the stop switch 40 are included as shown in Fig. 4.

The case 10 is a housing that houses the components of the handlebar switch device, and a cylindrical mounting hole 10A is formed therein as shown in Fig. 1. By inserting a handlebar for steering the vehicle that is a motorcycle into the mounting hole 10A, the case 10 can be placed on the handlebar. In this example embodiment, the hole direction of the mounting hole 10A, namely, a direction in which the inserted handlebar extends is the width direction of the vehicle. Therefore, in Fig. 1, the substantially lateral direction is the width direction of the vehicle, which is the direction in which the handlebar extends, and the direction substantially perpendicular to the handlebar is the longitudinal direction of the vehicle. In Fig. 1, the near side shall be the driver's side, namely, the rear side of the vehicle. Meanwhile, the handlebar switch device is not necessarily limited to being attached to the handlebar, and may be attached to a meter panel mounted on a scooter or the like or may be attached to any location of the vehicle that can be operated by the driver..

The case 10 in this example embodiment has a surface located substantially parallel to a direction in which the handlebar extends, and has an arrangement surface 11 that is a surface facing the driver as shown in Fig. 1, for example. Then, as shown in Fig. 1, the turn signal switch 20 (operation unit) for the driver to operate the turn signal 60 is provided on the arrangement surface 11 of the case 10. On the surface of the turn signal switch 20, there are formed a right turn signal operation surface 20A and a left turn signal operation surface 20B, which are located side by side in the width direction of the case 10, that is, in the horizontal direction as seen from the driver. By pressing the turn signal operation surface 20A or 20B in a direction substantially perpendicular to the operation surface (first direction), the driver can actuate the corresponding right or left turn signal 60 to light up as described below.

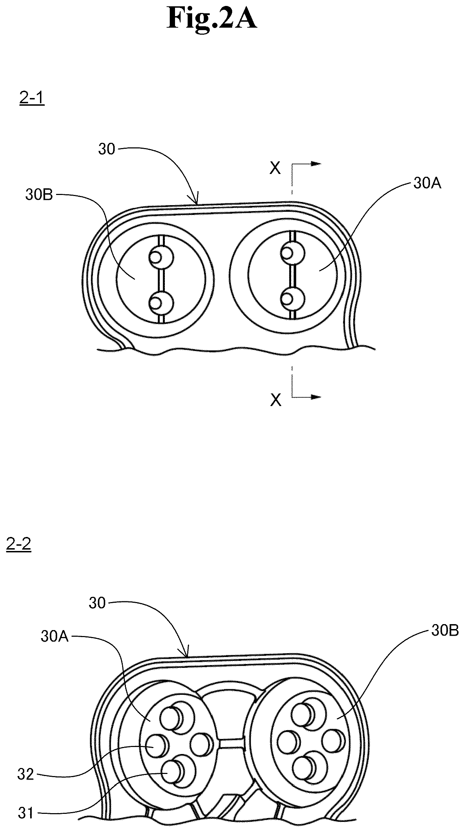

The contact device 30 shown in Fig. 2A (2-1) is arranged on the inner surface side of the turn signal switch 20 described above. The contact device 30 has contact structural parts 30A and 30B corresponding to the turn signal operation surfaces 20A and 20B of the turn signal switch 20, respectively. Since the contact structural parts 30A and 30B have almost the same structure, the configuration of the contact structural part 30A corresponding to the right turn signal operation surface 20A will be described herein. Moreover, along with this, a case will be described in which the right turn signal 60 is actuated to light up among the turn signals 60 to be operated. Fig. 2A (2-2) is a view of the contact device 30 seen from the back side, and a lower end surface 33, which will be described later, is omitted from the drawing.

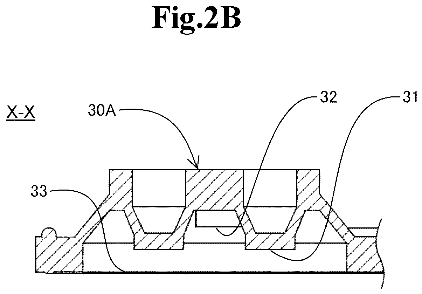

Fig. 2B shows a cross-sectional part taken along line X-X of the contact structural part 30A shown in Fig. 2A (2-1). The surface of the contact structural part 30A shown in Fig. 2A (2-1) faces the inner surface that is the back surface of the turn signal operation surface 20A of the turn signal switch 20. Consequently, the surface of the contact structural part 30A (the upper surface in Fig. 2B) is pressed and moved in a substantially perpendicular direction (first direction) to the turn signal operation surface 20A, that is, downward in Fig. 2B, along with an operation to press the turn signal operation surface 20A. Then, inside the contact structural part 30A, which is below the surface, as shown in the view seen from the back surface shown in Fig. 2A (2-2) and the cross-sectional view in Fig. 2B, two types of contacts 31 and 32 configured with rubber contacts and having different height positions are provided. Specifically, the contact structural part 30A is configured to be energized, that is, turned on when the two types of contacts 31 and 32 having different height positions with respect to the lower end surface 33 come into contact with fixed contacts (not shown in the drawings) provided on the lower end surface 33 so as to correspond to the respective contacts 31 and 32. The contact height of the first contact 31 (first energizing means) with respect to the lower end surface 33 is set lower than the contact height of the second contact 32 (second energizing means). Consequently, when the contact structural part 30A is pressed downward in Fig. 2B along with the operation to press the turn signal operation surface 20A, the first contact 31 is brought into an energized state (first energized state) or the second contact 32 is brought into an energized state (second energized state) in accordance with the pressing force.

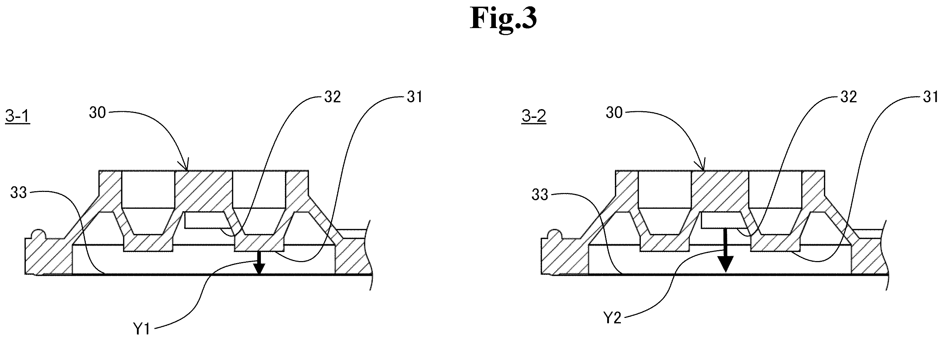

For example, as indicated by arrow Y1 in Fig. 3 (3-1), when the surface of the contact structural part 30A is pressed downward by a first distance, which is the distance between the first contact 31 and the lower end surface 33, the first contact 31 is energized, that is, brought into the first energized state. Moreover, as indicated by arrow Y2 in Fig. 3 (3-2), when the surface of the contact structural part 30A is pressed downward by the second distance, which is longer than the abovementioned first distance and is the distance between the second contact 32 and the lower end surface 33, the second contact 32 is energized, that is, brought into the second energized state. A case where the second contact 32 is brought into the second energized state is a case where the first contact 31 is first brought into the first energized state and the surface of the contact structural part 30A is further pressed downward from the above state. Then, the energized states of the first contact 31 and the second contact 32 described above are detected by the control device 50.

The contact structural part 30A is entirely made of an elastic member, and is configured to restore its shape when deformed by an external force. Consequently, in a case where the first contact 31 of the contact structure 30A is brought into the abovementioned energized state and thereafter the downward pressing operation on the contact structural part 30A is canceled, the contact structural part 30A restores its shape so as to separate from the lower end surface 33 and the first energized state is canceled. Likewise, in a case where the second contact 32 of the contact structural part 30A is brought into the abovementioned energized state and thereafter the downward pressing operation on the contact structural part 30A is canceled, the contact structural part 30A restores its shape so as to separate from the lower end surface 33 and the second energized state is canceled.

The stop switch 40 is installed in a predetermined part of the case 10. The stop switch 40 is configured with, for example, a press-down switch and, when the driver operates to press down, the stop switch 40 is brought into an energized state (ON state) and outputs a stop signal to the control device 50. The stop signal output when the stop switch is operated is detected by the control device 50. The stop switch 40 is operated to be pressed down when the driver operates to stop the actuation of the turn signal 60.

The control device 50 (control means) is configured with an arithmetic logic unit, and can realize processing to be described below by executing a program stored in an equipped memory unit. First, the control device 50 detects whether or not the first contact 31 and the second contact 32 of the contact structural part 30A described above are in the energized states. Then, the control device 50 controls the operation target turn signal 60 to be actuated to light up in accordance with the result of detection of the energized states of the first contact 31 and the second contact 32. Specifically, upon detecting the first energized state of the first contact 31, the control device 50 controls to actuate the right turn signal 60 to light up for a given time. That is to say, upon detecting the first energized state, the control device 50 controls to start the lighting of the turn signal 60, continue to actuate the turn signal to light up of until a predetermined period of time elapses after detection of the first energized state and, when the predetermined period of time elapses, automatically stop the lighting of the turn signal 60. At this time, even if the first energized state is canceled before the predetermined period of time elapses after the first energized state is detected, the control device 50 continues the lighting of the turn signal 60. The predetermined period of time to continue the lighting of the turn signal 60 may be any preset length of time, such as three seconds or a time for turning on the turn signal 60 three times.

Further, when detecting the second energized state of the second contact 32, the control device 50 continues the lighting of the turn signal 60 until detecting a stop signal output when the stop switch 40 is operated to be pressed down. Then, when the stop switch 40 is operated and the stop signal is detected, the control device 50 controls to stop the lighting of the turn signal 60. When detecting the second energized state of the second contact 32 as described above, the control device 50 has detected the first energized state of the first contact 31 beforehand and has already started the actuation of the turn signal 60 to light up. Consequently, when detecting the second energized state, the control device 50 continues the light-up of the turn signal 60 having already lit up until the stop switch 40 is operated and the stop signal is detected. At this time, even if the second energized state is canceled while the light-up of the turn signal 60 is continued after the second energized state is detected, the control device 50 continues the light-up of the turn signal 60.

### [Motion]

Next, the motion when the abovementioned turn signal 20 is operated will be described mainly with reference to a flowchart of Fig. 5. Here, a case will be described in which, of the turn signal switches 20, the turn signal operation surface 20A on the right side shown in Fig. 1 is operated, that is, the right turn signal 60 is operated by the driver.

First, a case will be described in which, for example, when making the vehicle change lanes, the driver performs an automatic stop operation to turn on the turn signal 60 and automatically stop in a predetermined period of time. In this case, the driver performs a press-down operation so as to push the turn signal operation surface 20A by the first distance, which is a short distance indicated by arrow Y1 in Fig. 3 (3-1), so that only the first contact 31 of the contact structural part 30A is energized. Consequently, the first contact 31 is brought into the first energized state and, when the control device 50 detects the energized state (Yes at step S1), the control device 50 controls to start the lighting of the turn signal 60 (step S2). The operation on the turn signal 60 is not limited to being performed by the pushing motion as described above, and may be performed by a swinging motion or a sliding motion. Accordingly, the contact device 30 may be configured such that the first contact 31 and the second contact 32 move as indicated by arrows in Fig. 3 when the turn signal operation surface 20A is swung or slid.

After starting the lighting of the turn signal 60, the control device 50 keeps the lighting of the turn signal 60 until the predetermined time having been set elapses. At this time, even if the first energized state is canceled, the control device 50 continues the lighting of the turn signal 60. Then, in a case where a further pressing operation on the turn signal switch 20 by the driver is not performed and the second energized state of the second contact 32 is not detected (No at step S3) and the predetermined period of time elapses (Yes at step S4), the control device 50 controls to stop the lighting of the turn signal 60 (step S6). Thus, by the driver's operation on the turn signal switch 20 so that only the first contact 31 is brough into the energized state, it is possible to keep the turn signal 60 turned on for a predetermined period of time by the driver's will and automatically stop.

Next, a case will be described in which the driver performs a usual turn signal operation, that is, an operation to turn on the turn signal 60 and thereafter operates the stop switch 40 to perform an operation to stop the lighting. In this case, the driver performs a press-down operation to push the turn signal operation surface 20A by the second distance, which is a long distance indicated by arrow Y2 in Fig. 3 (3-2). Consequently, first, the first contact 31 is brought into the first energized state and, when the control device 50 detects the energized state (Yes at step S1), the control device 50 starts the lighting of the turn signal 60 (step S2). Furthermore, since the press-down operation is performed on the turn signal operation surface 20A, the second contact 32 is brought into the second energized state and, when the control device 50 detects the energized state (Yes at step S3), the control device 50 continues the lighting of the turn signal 60 until a stop operation is performed on the turn signal 60 (No at step S5). At this time, the control device 50 continues the lighting of the turn signal 60 even when the second energized state and the first energized state are canceled. In this case, the lighting of the turn signal 60 is not stopped even if the predetermined period of time elapses.

After that, the driver performs a press-down operation on the stop switch 40 and the stop switch 40 is brought into an energized state and, when the control device 50 detects a stop signal thus output (Yes at step S5), the control device 50 stops the lighting of the turn signal 60 (step S6). Thus, in a case where there is no need to automatically stop the lighting of the turn signal 60 as described above, the driver can operate the turn signal switch 20 until the second contact 32 is brought into the energized state as described above and thereby continue the lighting of the turn signal 60 until operating the stop switch 40. Meanwhile, the stop signal is not limited to being output by the operation on the stop switch 40 as described above. For example, the stop signal may be output to the control device 50 described above from another control device mounted on the vehicle in accordance with the condition of the vehicle such as vehicle speed and mileage.

Although a case in which the turn signal switch 20 is mounted on the handlebar switch device and the turn signal 60 is actuated to light up has been illustrated above, a switch for operating another device may be provided instead of the turn signal switch 20, and accordingly, the control device 50 may control the actuation of the other device. For example, a device to be the target for control of actuation may be a headlamp, and the control device may control to light the headlamp for a predetermined period of time in the abovementioned first energized state and control to continue the lighting of the headlamp in the second energized state.

Although the present invention has been described above with reference to the example embodiments, the present invention is not limited to the above example embodiments. The present invention is limited by the appended claims.

### DESCRIPTION OF REFERENCE NUMERALS

- 10: case
- 10A: mounting hole
- 11: arrangement surface
- 20: turn signal switch
- 20A, 20B: turn signal operation surface
- 30: contact device
- 30A, 30B: contact structural part
- 31: first contact
- 32: second contact
- 33: lower end surface
- 40: stop switch
- 50: control device
- 60: turn signal

## Claims

1. A handlebar switch device comprising:
a first energizing means (31) that enters a first energized state when an operation unit is operated in a first direction;
a second energizing means (32) that enters a second energized state when the operation unit is further operated in the first direction during the first energized state; and
a control means (50) that actuates a device corresponding to the operation unit in accordance with the first energized state and the second energized state detected thereby,
wherein the control means actuates the device upon detection of the first energized state, and stops the actuation of the device when a predetermined period of time elapses after the detection of the first energized state, said handlebar switch device being **characterized in that**
the control means (50) continues the actuation of the device until the predetermined period of time elapses after the detection of the first energized state and stops the actuation of the device when the predetermined period of time elapses, and continues the actuation of the device until detection of a preset stop signal upon detection of the second energized state and stops the actuation of the device upon detection of the stop signal.

2. The handlebar switch device according to Claim 1, wherein:
the first energizing means (31) cancels the first energized state when the operation on the operation unit in the first direction is canceled;
the second energizing means (32) cancels the second energizing state when the operation on the operation unit in the first direction is canceled; and
the control means (50) continues the actuation of the device until the predetermined period of time elapses after the detection of the first energized state even in a case where the first energized state is canceled, and continues the actuation of the device until detection of the stop signal after the detection of the second energized state even in a case where the second energized state is canceled.

3. The handlebar switch device according to any one of Claims 1 or 2, wherein:
the first energizing means (31) is configured to enter the first energized state when the operation unit is pressed by a first distance in the first direction, and cancel the first energized state when the press is canceled; and
the second energizing means (32) is configured to enter the second energized state when the operation unit is pressed by a second distance that is longer than the first distance in the first direction, and cancel the second energized state when the press is canceled.

4. The handlebar switch device according to Claim 1, wherein:
the device is controlled by the control means (5) to be actuated to light up; and
the control means continues the light-up actuation of the device until the predetermined period of time elapses after the detection of the first energized state, and continues the light-up actuation of the device until detection of the stop signal after the detection of the second energized state.

5. The handlebar switch device according to Claim 4, wherein:
the device is a turn signal; and
the control means (50) continues the actuation of the turn signal until the predetermined period of time elapses after the detection of the first energized state, and continues the actuation of the turn signal until detection of the stop signal after the detection of the second energized state.

6. The handlebar switch device according to Claim 1, wherein
the control means (50) detects the second energized state and continues the actuation of the device, and stops the actuation of the device when detecting the stop signal output from a control device mounted on a vehicle equipped with the device.

7. A control method by a handlebar switch device, the handlebar switch device comprising:
a first energizing means (31) that enters a first energized state when an operation unit is operated in a first direction;
a second energizing means (32) that enters a second energized state when the operation unit is further operated in the first direction during the first energized state; and
a control means (50) that actuates a device corresponding to the operation unit in accordance with the first energized state and the second energized state detected thereby,
the control method comprising
actuating the device upon detection of the first energized state, and stopping the actuation of the device when a predetermined period of time elapses after the detection of the first energized state, the control method being **characterized by** further comprising
continuing the actuation of the device until the predetermined period of time elapses after the detection of the first energized state and stopping the actuation of the device when the predetermined period of time elapses, and continuing the actuation of the device until detection of a preset stop signal upon detection of the second energized state and stopping the actuation of the device upon detecting the stop signal.

## Patentansprüche

1. Lenkerschaltervorrichtung, umfassend:
ein erstes Bestromungsmittel (31), das in einen ersten bestromten Zustand eintritt, wenn eine Bedieneinheit in einer ersten Richtung betätigt wird;
ein zweites Bestromungsmittel (32), das in einen zweiten bestromten Zustand eintritt, wenn die Bedieneinheit während des ersten bestromten Zustands weiter in der ersten Richtung betätigt wird; und
ein Steuermittel (50), das eine der Bedieneinheit entsprechende Vorrichtung in Übereinstimmung mit dem dadurch erfassten ersten bestromten Zustand und zweiten bestromten Zustand betätigt,
wobei das Steuermittel die Vorrichtung bei Erfassung des ersten bestromten Zustands betätigt und die Betätigung der Vorrichtung stoppt, wenn eine vorbestimmte Zeitspanne nach der Erfassung des ersten bestromten Zustands abläuft, wobei die Lenkerschaltervorrichtung **dadurch gekennzeichnet ist, dass**
das Steuermittel (50) die Betätigung der Vorrichtung fortsetzt, bis die vorbestimmte Zeitspanne nach der Erfassung des ersten bestromten Zustands abläuft, und die Betätigung der Vorrichtung stoppt, wenn die vorbestimmte Zeitspanne abläuft, und die Betätigung der Vorrichtung bis zur Erfassung eines voreingestellten Stoppsignals bei Erfassung des zweiten bestromten Zustands fortsetzt und die Betätigung der Vorrichtung bei Erfassung des Stoppsignals stoppt.

2. Lenkerschaltervorrichtung nach Anspruch 1, wobei:
das erste Bestromungsmittel (31) den ersten bestromten Zustand aufhebt, wenn die Betätigung an der Bedieneinheit in der ersten Richtung aufgehoben wird;
das zweite Bestromungsmittel (32) den zweiten bestromten Zustand aufhebt, wenn die Betätigung an der Bedieneinheit in der ersten Richtung aufgehoben wird; und
das Steuermittel (50) die Betätigung der Vorrichtung fortsetzt, bis die vorbestimmte Zeitspanne nach der Erfassung des ersten bestromten Zustands abläuft, selbst in einem Fall, in dem der erste bestromte Zustand aufgehoben wird, und die Betätigung der Vorrichtung bis zur Erfassung des Stoppsignals nach der Erfassung des zweiten bestromten Zustands fortsetzt, selbst in einem Fall, in dem der zweite bestromte Zustand aufgehoben wird.

3. Lenkerschaltervorrichtung nach einem der Ansprüche 1 oder 2, wobei:
das erste Bestromungsmittel (31) dazu konfiguriert ist, in den ersten bestromten Zustand einzutreten, wenn die Bedieneinheit um eine erste Strecke in der ersten Richtung gedrückt wird, und den ersten bestromten Zustand aufzuheben, wenn das Drücken aufgehoben wird; und
das zweite Bestromungsmittel (32) dazu konfiguriert ist, in den zweiten bestromten Zustand einzutreten, wenn die Bedieneinheit um eine zweite Strecke, die länger als die erste Strecke ist, in der ersten Richtung gedrückt wird, und den zweiten bestromten Zustand aufzuheben, wenn das Drücken aufgehoben wird.

4. Lenkerschaltervorrichtung nach Anspruch 1, wobei:
die Vorrichtung durch das Steuermittel (5) gesteuert wird, um zum Aufleuchten betätigt zu werden; und
das Steuermittel die Aufleucht-Betätigung der Vorrichtung fortsetzt, bis die vorbestimmte Zeitspanne nach der Erfassung des ersten bestromten Zustands abläuft, und die Aufleucht-Betätigung der Vorrichtung bis zur Erfassung des Stoppsignals nach der Erfassung des zweiten bestromten Zustands fortsetzt.

5. Lenkerschaltervorrichtung nach Anspruch 4, wobei:
die Vorrichtung ein Fahrtrichtungsanzeiger ist; und
das Steuermittel (50) die Betätigung des Fahrtrichtungsanzeigers fortsetzt, bis die vorbestimmte Zeitspanne nach der Erfassung des ersten bestromten Zustands abläuft, und die Betätigung des Fahrtrichtungsanzeigers bis zur Erfassung des Stoppsignals nach der Erfassung des zweiten bestromten Zustands fortsetzt.

6. Lenkerschaltervorrichtung nach Anspruch 1, wobei
das Steuermittel (50) den zweiten bestromten Zustand erfasst und die Betätigung der Vorrichtung fortsetzt, und die Betätigung der Vorrichtung stoppt, wenn es das Stoppsignal erfasst, das von einer an einem mit der Vorrichtung ausgestatteten Fahrzeug montierten Steuervorrichtung ausgegeben wird.

7. Steuerverfahren durch eine Lenkerschaltervorrichtung, wobei die Lenkerschaltervorrichtung umfasst:
ein erstes Bestromungsmittel (31), das in einen ersten bestromten Zustand eintritt, wenn eine Bedieneinheit in einer ersten Richtung betätigt wird;
ein zweites Bestromungsmittel (32), das in einen zweiten bestromten Zustand eintritt, wenn die Bedieneinheit während des ersten bestromten Zustands weiter in der ersten Richtung betätigt wird; und
ein Steuermittel (50), das eine der Bedieneinheit entsprechende Vorrichtung in Übereinstimmung mit dem dadurch erfassten ersten bestromten Zustand und zweiten bestromten Zustand betätigt,
wobei das Steuerverfahren umfasst
Betätigen der Vorrichtung bei Erfassung des ersten bestromten Zustands, und Stoppen der Betätigung der Vorrichtung, wenn eine vorbestimmte Zeitspanne nach der Erfassung des ersten bestromten Zustands abläuft, wobei das Steuerverfahren **dadurch gekennzeichnet ist, dass** es ferner umfasst
Fortsetzen der Betätigung der Vorrichtung, bis die vorbestimmte Zeitspanne nach der Erfassung des ersten bestromten Zustands abläuft, und Stoppen der Betätigung der Vorrichtung, wenn die vorbestimmte Zeitspanne abläuft, und Fortsetzen der Betätigung der Vorrichtung bis zur Erfassung eines voreingestellten Stoppsignals bei Erfassung des zweiten bestromten Zustands und Stoppen der Betätigung der Vorrichtung bei Erfassen des Stoppsignals.

## Revendications

1. Dispositif de commutation de guidon comprenant :
un premier moyen d'excitation (31) qui entre dans un premier état excité lorsqu'une unité d'actionnement est actionnée dans une première direction ;
un deuxième moyen d'excitation (32) qui entre dans un deuxième état excité lorsque l'unité d'actionnement est en outre actionnée dans la première direction pendant le premier état excité ; et
un moyen de commande (50) qui actionne un dispositif correspondant à l'unité d'actionnement conformément au premier état excité et au deuxième état excité détectés par celui-ci,
dans lequel le moyen de commande actionne le dispositif à la détection du premier état excité, et arrête l'actionnement du dispositif lorsqu'une période de temps prédéterminée s'écoule après la détection du premier état excité, ledit dispositif de commutation de guidon étant **caractérisé en ce que**
le moyen de commande (50) poursuit l'actionnement du dispositif jusqu'à ce que la période de temps prédéterminée s'écoule après la détection du premier état excité et arrête l'actionnement du dispositif lorsque la période de temps prédéterminée s'écoule, et poursuit l'actionnement du dispositif jusqu'à la détection d'un signal d'arrêt prédéfini à la détection du deuxième état excité et arrête l'actionnement du dispositif à la détection du signal d'arrêt.

2. Dispositif de commutation de guidon selon la revendication 1, dans lequel :
le premier moyen d'excitation (31) annule le premier état excité lorsque l'action sur l'unité d'actionnement dans la première direction est annulée ;
le deuxième moyen d'excitation (32) annule le deuxième état d'excitation lorsque l'action sur l'unité d'actionnement dans la première direction est annulée ; et
le moyen de commande (50) poursuit l'actionnement du dispositif jusqu'à ce que la période de temps prédéterminée s'écoule après la détection du premier état excité même dans un cas où le premier état excité est annulé, et poursuit l'actionnement du dispositif jusqu'à la détection du signal d'arrêt après la détection du deuxième état excité même dans un cas où le deuxième état excité est annulé.

3. Dispositif de commutation de guidon selon l'une quelconque des revendications 1 ou 2, dans lequel :
le premier moyen d'excitation (31) est configuré pour entrer dans le premier état excité lorsque l'unité d'actionnement est pressée d'une première distance dans la première direction, et annuler le premier état excité lorsque la pression est annulée ; et
le deuxième moyen d'excitation (32) est configuré pour entrer dans le deuxième état excité lorsque l'unité d'actionnement est pressée d'une deuxième distance qui est plus longue que la première distance dans la première direction, et annuler le deuxième état excité lorsque la pression est annulée.

4. Dispositif de commutation de guidon selon la revendication 1, dans lequel :
le dispositif est commandé par le moyen de commande (5) pour être actionné pour s'allumer ; et
le moyen de commande poursuit l'actionnement d'allumage du dispositif jusqu'à ce que la période de temps prédéterminée s'écoule après la détection du premier état excité, et poursuit l'actionnement d'allumage du dispositif jusqu'à la détection du signal d'arrêt après la détection du deuxième état excité.

5. Dispositif de commutation de guidon selon la revendication 4, dans lequel :
le dispositif est un clignotant ; et
le moyen de commande (50) poursuit l'actionnement du clignotant jusqu'à ce que la période de temps prédéterminée s'écoule après la détection du premier état excité, et poursuit l'actionnement du clignotant jusqu'à la détection du signal d'arrêt après la détection du deuxième état excité.

6. Dispositif de commutation de guidon selon la revendication 1, dans lequel le moyen de commande (50) détecte le deuxième état excité et poursuit l'actionnement du dispositif, et arrête l'actionnement du dispositif à la détection du signal d'arrêt délivré en sortie par un dispositif de commande monté sur un véhicule équipé du dispositif.

7. Procédé de commande par un dispositif de commutation de guidon, le dispositif de commutation de guidon comprenant :
un premier moyen d'excitation (31) qui entre dans un premier état excité lorsqu'une unité d'actionnement est actionnée dans une première direction ;
un deuxième moyen d'excitation (32) qui entre dans un deuxième état excité lorsque l'unité d'actionnement est en outre actionnée dans la première direction pendant le premier état excité ; et
un moyen de commande (50) qui actionne un dispositif correspondant à l'unité d'actionnement conformément au premier état excité et au deuxième état excité détectés par celui-ci,
le procédé de commande comprenant
l'actionnement du dispositif à la détection du premier état excité, et l'arrêt de l'actionnement du dispositif lorsqu'une période de temps prédéterminée s'écoule après la détection du premier état excité, le procédé de commande étant **caractérisé en ce qu'**il comprend en outre
la poursuite de l'actionnement du dispositif jusqu'à ce que la période de temps prédéterminée s'écoule après la détection du premier état excité et l'arrêt de l'actionnement du dispositif lorsque la période de temps prédéterminée s'écoule, et la poursuite de l'actionnement du dispositif jusqu'à la détection d'un signal d'arrêt prédéfini à la détection du deuxième état excité et l'arrêt de l'actionnement du dispositif à la détection du signal d'arrêt.
